Europäisches Patentamt

European Patent Office

Office européen des brevets

(19)

(11) Publication number : **0 442 342 B1**

(12) **EUROPEAN PATENT SPECIFICATION**

(45) Date of publication of patent specification :
17.11.94 Bulletin 94/46

(51) Int. Cl.⁵ : **G10L 3/00, G10L 3/02**

(21) Application number : **91101452.0**

(22) Date of filing : **04.02.91**

(54) **Voice signal processing device.**

(30) Priority : **13.02.90 JP 33210/90**
**13.02.90 JP 33211/90**

(43) Date of publication of application :
**21.08.91 Bulletin 91/34**

(45) Publication of the grant of the patent :
**17.11.94 Bulletin 94/46**

(84) Designated Contracting States :
**CH DE FR GB LI NL SE**

(56) References cited :
**WO-A-88/07739**
**US-A- 3 566 035**
**US-A- 4 630 305**
**THE JOURNAL OF THE ACOUSTICAL SOCI-
ETY OF AMERICA, vol. 41, no. 2, 1967, pages
293-309; A.M. NOLL: "Cepstrum pitch deter-
mination"**

(56) References cited :
**PROCEEDINGS OF THE INTERNATIONAL
CONFERENCE ON INDUSTRIAL ELEC-
TRONICS, CONTROL AND INSTRUMEN-
TATION, Cambridge, MA, 3rd - 6th November
1987, pages 997-1002; R.J. CONWAY et al.:
"Adaptive processing with feature extraction
to enhance the intelligibility of noise-corrup-
ted speech"
PROCEEDINGS OF THE INTERNATIONAL
CONFERENCE ON ACOUSTICS, SPEECH AND
SIGNAL PROCESSING, San Diego, CA, 19th -
21st March 1984, pages 18A.5.1-4; B.A. HAN-
SON et al.: "The harmonic magnitude supres-
sion (BMS) technique for intelligibility
enhancement in the presence of interfering
speech"**

(73) Proprietor : **MATSUSHITA ELECTRIC
INDUSTRIAL CO., LTD.**
**1006, Oaza Kadoma**
**Kadoma-shi, Osaka-fu, 571 (JP)**

(72) Inventor : **Kane, Joji**
**4-34, Jingu 1-chome**
**Nara-shi, Nara 631 (JP)**
Inventor : **Nohara, Akira**
**10-17, Matsuzonocho**
**Nishinomiya-shi, Hyogo 662 (JP)**

(74) Representative : **Patentanwälte Beetz - Timpe -
Siegfried Schmitt-Fumian - Mayr**
**Steinsdorfstrasse 10**
**D-80538 München (DE)**

EP 0 442 342 B1

## Description

### 1. Field of the Invention

The present invention relates to a voice signal processing device capable of detecting a vowel / a consonant from a voice signal.

### 2. Description of the Related Art

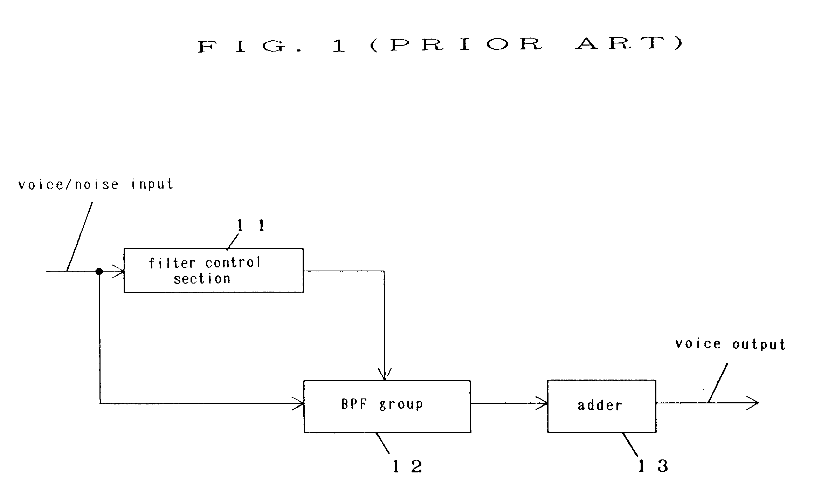

Fig. 1 is a block diagram of a prior art signal processing device. The numeral 11 indicates a filter control section into which a signal containing a noise, is inputted and which detects the signal or the noise, the numeral 12 does a BPF group having numerous band-pass filters, and the numeral 13 does an adder. That is, the filter control section 11 controls a filter coefficient of the BPF group in response to the noise or signal of an input signal, and the BPF group 12 is band-pass filters configured in a manner to divide the input signal into proper bands and determine the pass band characteristic by a control signal from the filter control section 11.

The operation of the prior art signal processing device configured as described above will be explained hereinafter.

An input signal in which a voice is superimposed by a noise is supplied to the filter control section 11. The filter control section 11 determines from the supplied signal a noise component corresponding to each band of the BPF group 12, and supplies a filter coefficient which allows the noise component not to pass through the BPF group 12 to the BPF group 12.

The BPF group 12 divides the input signal into proper bands, allows the input signal to pass through as appropriate by utilizing the filter coefficient inputted from the filter control section 11 for each band, and supplies the signal to the adder 13. The adder 13 mixes signals divided by the BPF group 12 into proper bands to obtain an output.

With the above operation, the pass level of noise-contained bands of the input signal is decreased by the BPF group 12. As a result, a signal having an attenuated-noise component is obtained.

However, the numerousness of noise is not always coincident with articulation and accordingly, a prior art signal processing device has a problem that a noise can be held down, but the articulation is not improved.

A signal processing device and method according to the preambles of claims 1 and 5, respectively, are known from AM Noll., "Cepstrum Pitch Determination", J. Acoust.Soc.Am. 41 (1966), p. 293-309.

## Summary of the Invention

The present invention intends to offer such a voice signal processing device wherein detection of a vowel and a consonant is improved.

A voice signal processing device of claim 1 comprises:

frequency analysis means for frequency analyzing a voice input signal;

cepstrum-analysis means for cepstrum-analyzing the output from the frequency analysis means;

peak detection means for detecting a cepstrum peak of the cepstrum-analyzed output from the cepstrum analysis means;

mean-value calculation means for calculating a mean-value level of the cepstrum-analyzed output from the cepstrum analysis means; and

vowel/consonant detection means for detecting a vowel from a consonant, on the basis of the peak-detected information from the peak detection means and of the mean-value information from the mean-value calculation means, by determining a vowel according to the peak and determining a consonant according to the mean-value information level.

And a voice signal processing device of claim 2 in accordance with claim 1, has such vowel/consonant detection means comprising;

a first comparator for comparing the peak detected by the peak detection means with a threshold set by a first threshold setting section;

a second comparator for comparing the mean-value calculated by the mean-value calculation means with a specified threshold set by a second theshold setting section; and

vowel/consonant detection circuit for detecting a vowel and a consonant on the basis of the compared results from the first and the second comparators, and for outputting the detected result.

And the present invention intends to offer voice signal processing device capable of detecting a vowel and a consonant and suppressing noise by use of the detected result, thereby to obtain good articulated signal.

A voice signal processing device of claim 3 comprises in addition to the features of claim 1:

cancel coefficient setting means for setting a cancel coefficient utilizing the detected result of the vowel/consonant detection means;

noise prediction means into which the Fourier-transformed voice signal is inputted and which predicts the noise component thereof;

cancel means into which the noise-predicted output from the noise prediction means, the voice signal, and the cancel coefficient signal set by the cancel coefficient setting means are inputted, and which cancels a noise component considering the cancel ratio from the voice signal; and

signal composition means for composing the canceled output from the cancel means.

A voice signal processing device of claim 4 is characterized in that the frequency analysis means is a band division means for band dividing a voice input signal.

## BRIEF DESCRIPTION OF THE DRAWINGS

Fig. 1 is a block diagram showing a prior art voice signal processing device;

Fig. 2 ia a block diagram showing an embodiment of a voice signal processing device according to the present invention;

Fig. 3 is a graph showing a cepstrum peak in the embodiment;

Fig. 4 is a block diagram showing an embodiment of a voice signal processing device according to another present invention;

Fig. 5 is a block diagram showing an embodiment of a voice signal processing device according to another present invention;

Fig. 6 is a graph to help explain a noise prediction method of the embodiment;

Figs. 7 and 8 are wave form charts to help explain a cancellation method of the embodiment;

Fig. 9 is a block diagram showing an embodiment of a voice signal processing device according to another present invention; and

Fig. 10 is a graph to help explain a cancel coefficient of the embodiment.

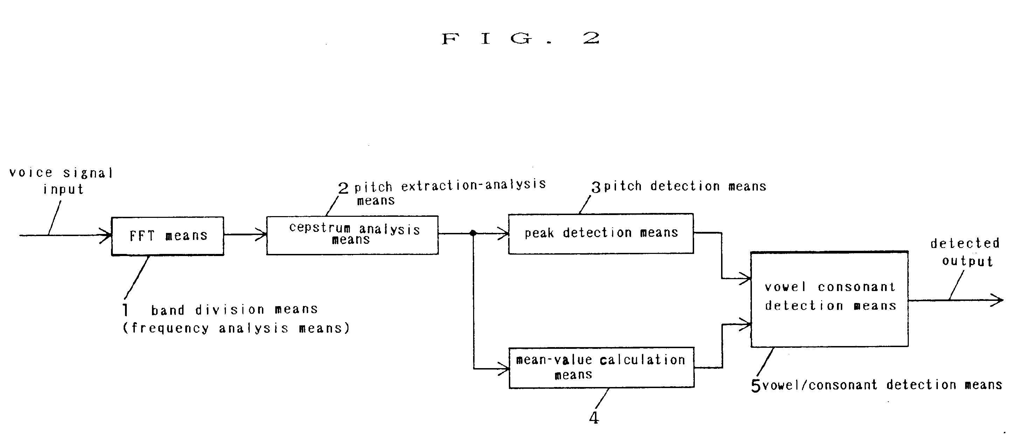

Fig. 2 is a block diagram of a voice signal processing device in an embodiment of the present invention. In Fig. 2, the numeral 1 indicates band division means as an example of frequency analysis means for frequency-analyzing a signal, in particular. FFT means for Fourier transforming a signal, and numeral 2 are cepstrum analysis means for performing cepstrum analysis as an example of pitch extraction-analysis means. The term "cepstrum" which is derived from the term "spectrum" is in this application symbolized by $c(\tau)$ and obtained by inverse-Fourier-transforming the logarithm of a short- time spectrum $S(\omega)$.

$$c(\tau) = \sum_{m=0}^{M} \log | S(\omega_m) |^2 \cos(\tau \omega_m)$$

The dimension of $\tau$ is time and $\tau$ (time) is named "quefrency" (which is derived from the word "frequency". Numeral 3 are peak detection means as an example of pitch detection means for detecting a peak of a cepstrum distribution, numeral 4 are mean-value calculation means for calculating the mean-value of the cepstrum distribution, and numeral 5 are vowel/consonant detection means for detecting a vowel and a consonant from input signals containing noise.

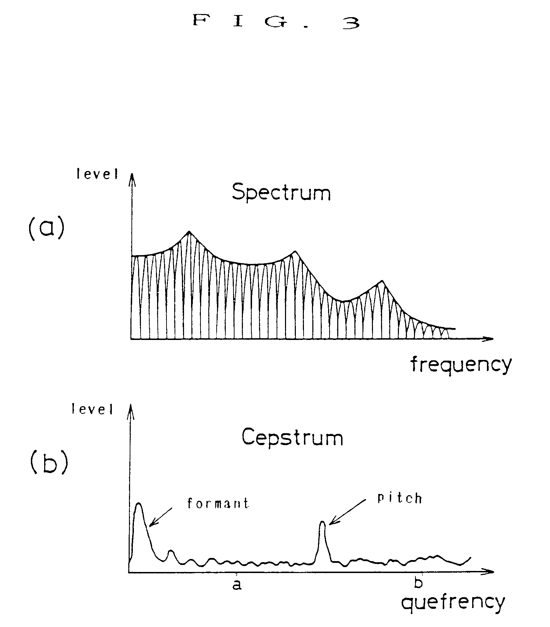

That is, the FFT means 1 fast-Fourier transforms a voice signal input, and supplies the transformed signal to the cepstrum analysis means 2. The cepstrum analysis means 2 determines a cepstrum of the spectrum signal, and supplies the cepstrum to the peak detection means 3 and the mean-value calculation means 4. Fig 3 (a) shows graph of such spectrum and (b) shows graph of such cepstrum. The peak detection means 3 determines a peak of the cepstrum obtained by the cepstrum analysis means 2, and supplies the peak to the vowel/consonant detection means 5.

On the other hand, the mean-value calculation means 4 calculates a mean-value of the cepstrum obtained by the cepstrum analysis means 2, and supplies the mean-value to the vowel/consonant detection means 5. The vowel/ consonant detection means 5 detects a vowel and a consonant of the voice signal input by use of the cepstrum peak supplied from the peak detection means 3 and the cepstrum mean-value supplied from the mean-value calculation means 4, and outputs the detected result as a detected output.

The operation of the voice signal processing device in the embodiment of the present invention configured as described above will be explained hereinafter.

A voice signal input is fast-Fourier transformed by the FFT means 1, determined for a cepstrum thereof by the cepstrum analysis means 2, and determined for a peak of the cepstrum by the peak detection means 3. Also, a mean-value of the cepstrum is determined by the mean-value calculation means 4. Then, the vowel/consonant detection means 5, when a signal indicating that the peak has been detected is inputted from the peak detection means 3, determines the voice signal input to be a vowel area. For the detection of a consonant, for example, when the cepstrum mean-value inputted from the mean-value calculation means 4 is larger than a predetermined value or when an increase of the cepstrum mean-value (differential coefficient) is larger than a predetermined value, the voice signal input is determined to be consonant area. As a result, a signal indicating a vowel/consonant, or a signal indicating a voice area including a vowel and a consonant is outputted.

According to the present invention as described above, the detecting of a vowel and a consonant allows the voice part detection to be accurately performed.

Another present invention will be explained herein-after.

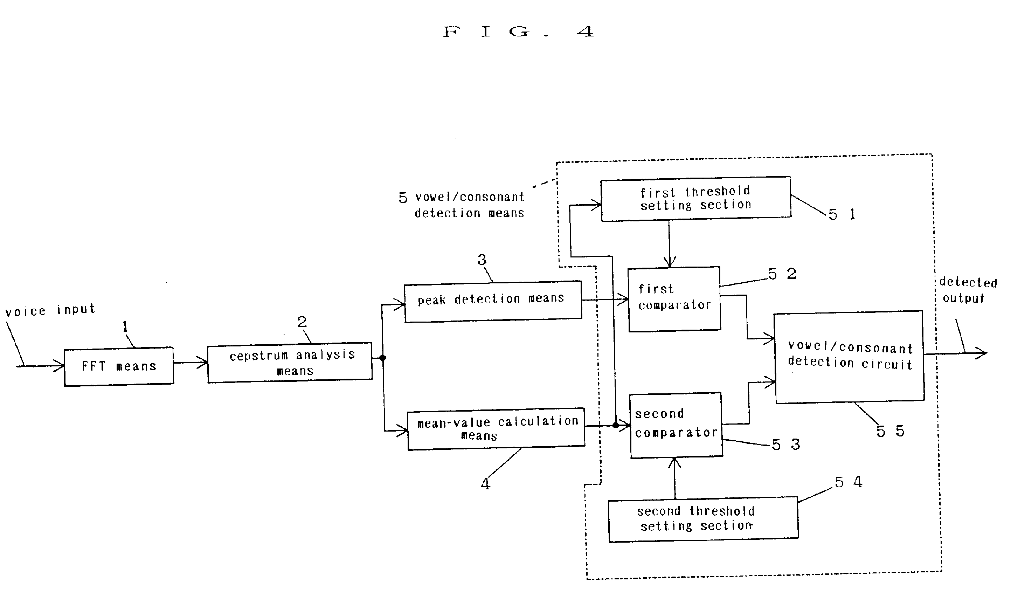

Fig. 4 is a block diagram showing an embodiment thereof. The same numeral is assigned to the same means as that in the embodiment of Fig. 2. That is, the numeral 1 indicates FFT means for fast-Fourier transforming a voice signal, the numeral 2 does cepstrum analysis means for determining a cepstrum of the Fourier-transformed spectrum signal, the numeral 3 does peak detection means for determining a peak on the basis of the cepstrum-analyzed result, and the numeral 4 does mean-value calculation means for calculating a mean-value of the cepstrum.

The vowel/consonant detection means 5 has means as described below.

That is, a first comparator 52 is a circuit which compares the peak information obtained by the peak detection means 3 with a specified threshold set by a first threshold setting section 51, and outputs the result. The first threshold setting section 51 is means for setting a threshold in response to the mean-value obtained by the mean-value calculation means 4.

A second comparator 53 is a circuit which compares a specified threshold set by a second threshold setting section 54 with the mean-value obtained by the mean-value calculation means 4, and outputs the result.

A vowel/consonant detection means 55 is a circuit which determines whether an inputted voice signal is a vowel or a consonant on the basis of the compared result obtained by the first comparator 52 and the compared result obtained by the second comparator 53.

The operation of the above embodiment will be explained hereinafter.

The FFT means 1 fast-Fourier transforms a voice signal. The cepstrum analysis means 2 determines a cepstrum of the Fourier-transformed signal. The peak detection means 3 detects a peak of the determined cepstrum. On the other hand, the mean-value calculation means 4 calculates a mean-value of the determined cepstrum.

Then, the first threshold setting means 51 sets a threshold as a criterion by which the peak obtained by the peak detection means 3 is determined to be a vowel or not. At that time, the means 51 sets the threshold with reference to the mean-value obtained by the mean-value calculation means 4. For example, where the mean-value is large, the threshold is set to be a high value so that a peak indicating a vowel can be surely selected.

The first comparator 52 compares the threshold set by the first threshold setting means 51 with the peak detected by the peak detection means 3, and outputs the compared result.

On the other hand, the second threshold setting means 54 sets a specified threshold. The specified threshold is such as a threshold of mean-value itself, or a threshold of a differential coefficient indicating an increased mean-value tendency. Then, the second comparator 53 compares the mean-value obtained by the mean-value calculation means 4 with the threshold set by the second threshold setting means 54, and outputs the compared result. That is, the comparator 53 compares a calculated mean-value with a threshold mean-value, or compares an increase value of the calculated mean-value with a threshold differential coefficient value.

The vowel/consonant detection circuit 55 detects a vowel and a consonant on the basis of the compared result from the first comparator 52 and the compared result from the second comparator 53. When a peak has been surely detected with respect to the compared result from the first comparator 52, the area is determined to be a vowel. When a mean-value exceeds that of the threshold with respect to the compared result from the second comparator 53, the area is determined to be a consonant. Alternatively, the circuit 55 compares an increase of the mean-value with a differential coefficient of the threshold, and when the mean-value increase exceeds the threshold differential coefficient , the area is determined to be a consonant.

The detection by the vowel/consonant detection means 55 may be also performed in such a manner that, considering a characteristic of the area of voice vowel and consonant, for example, a characteristic that a consonant is accompanied by a vowel, a consonant is determined after when the consonant is accompanied by a vowel. That is, in order to perform more surely the discrimination of a noise from a consonant, if, even when a signal is determined to be a consonant by a mean-value thereof, thereafter no vowel area continues, the signal is determined to be a noise.

The present invention, though implemented in software utilizing a computer, may also be implemented by use of a dedicated hard circuit.

As apparent by the above description, the present invention comprises pitch extraction-analysis means for extracting a analyzing a pitch of a frequency-analyzed signal, pitch selection means for detecting a pitch in the analyzed output, mean-value calculation means for calculating a mean-value level in the pitch extracted and analyzed output, and vowel/consonant detection means for detecting a vowel from a consonant, on the basis of the pitch-detected information from the pitch selection means and of the mean-value information from the mean-value calculation means, by determining a vowel according to the pitch and determining a consonant according to the mean-value information level, whereby there is an effect that a vowel and a consonant can be surely detected to allow a voice to be correctly detected.

According to drawings, an embodiment of another present invention will be explained hereinafter.

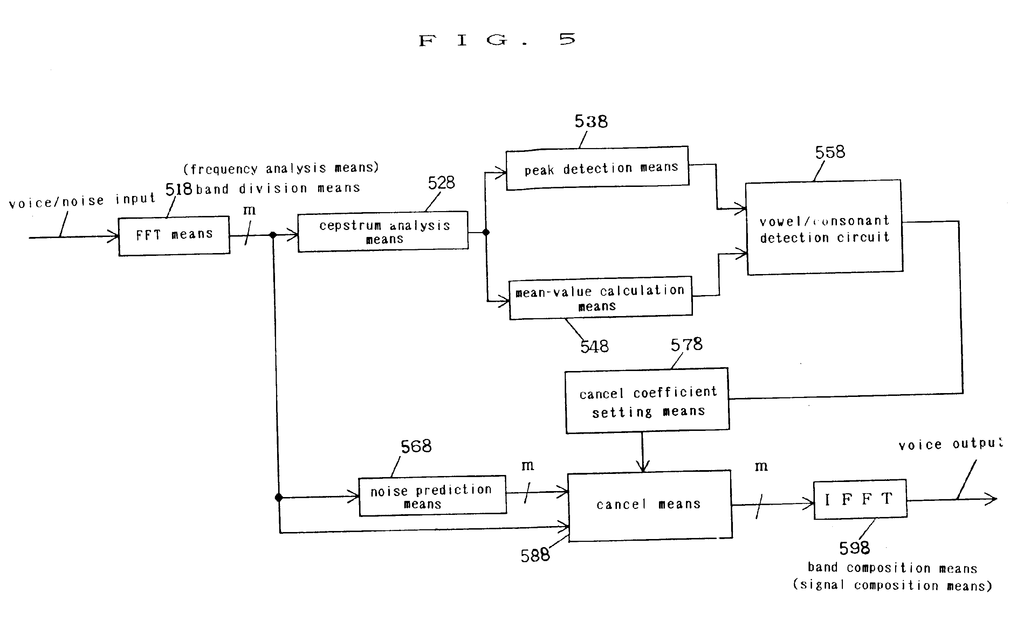

Fig. 5 is a block diagram of a voice signal processing device in an embodiment of the present invention. In Fig. 5, the numeral 518 indicates band division means for frequency-band dividing the signal, as an example of frequency analysis means for performing a frequency analysis of a signal, in particular, FFT means for Fourier transforming the signal, the numeral 528 does cepstrum analysis means for performing a cepstrum analysis, the numeral 538 does peak detection means for detecting a peak of a cepstrum distribution, the numeral 548 does mean-value calculation means for calculating a mean-value of the cepstrum distribution, and the numeral 558 does vowel/ consonant detection means for detecting a vowel and a consonant. That is, the FFT means 518 fast-Fourier transforms a voice signal input, and supplies the transformed result to the cepstrum analysis means 528. The cepstrum analysis means 528 determines a cepstrum of the cepstrum signal, and supplies the cepstrum to the peak detection means 538 and the mean-value calculation means 548. Fig. 3 (a) and (b) show the graphs of such spectrum and cepstrum. The peak detection means 538 determines a peak of the cepstrum obtained by the cepstrum analysis means 528, and supplies the peak to the vowel/consonant detection means 558.

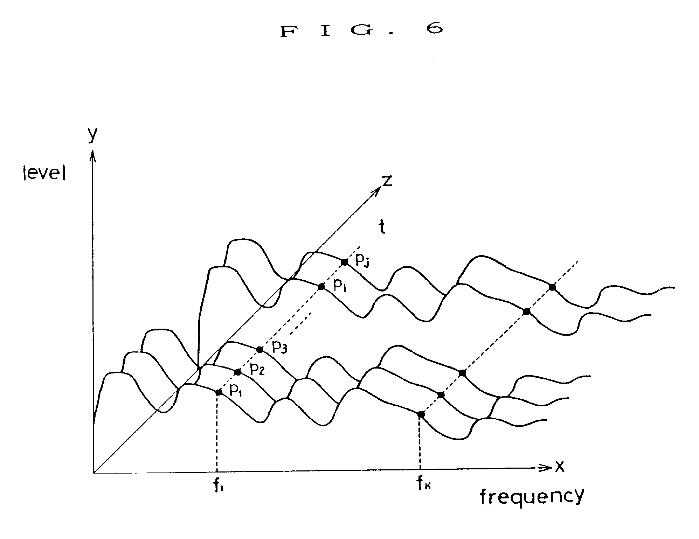

On the other hand, the mean-value calculation means 548 calculates a mean-value of the cepstrum obtained by the cepstrum analysis means 528, and supplies the mean-value to the vowel/consonant detection means 558. The vowel/ consonant detection means 558 detects a vowel and a consonant of the voice signal input by use of the cepstrum peak supplied from the peak detection means 538 and the cepstrum mean-value supplied from the mean-value calculation means 548, and outputs the discriminated result . The numeral 568 indicates noise prediction means for inputting therein the outputted signal from the FFT 518 and predicting a noise component, the numeral 588 does cancel means for canceling the noise in a manner as described later, and the numeral 598 does band composition means as an example of signal composition means, in particular, IFFT means for performing an inverse-Fourier transformation. More specifically, the noise prediction means 568 predicts a noise component for each channel on the basis of a voice/noise input divided into m channels, and supplies the predicted result to the cancel means 588. For example, the noise prediction is performed in a manner as shown in Fig. 6. That is, by allowing the x axis to represent a frequency, the y axis to represent a noise level and the z axis to represent a time, and taking data $p_1$ and $p_2$ through $p_i$ at the frequency $f_i$, the subsequent $p_j$ is predicted.

For example by calculating a mean-value of the noise components $p_1$ through $p_i$, the mean-value is taken as $p_j$.

Alternatively, when a voice signal portion continues thereafter, the $p_j$ is multiplied by an attenuation coefficient. The cancel means 588 is means to which a m channel signal from the FFT 1 and the noise prediction means 568 is supplied and which cancels a noise by subtracting the noise for each channel in response to a cancel coefficient input, and supplies the noise-canceled signal to the IFFT means 598. That is, the cancel means 588 cancels a noise by multiplying the predicted noise component by a cancel coefficient.

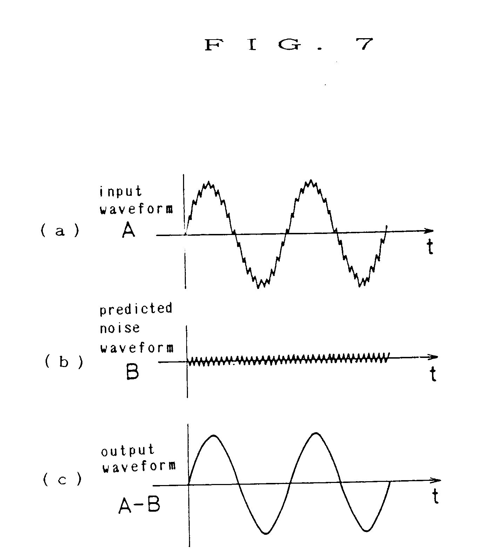

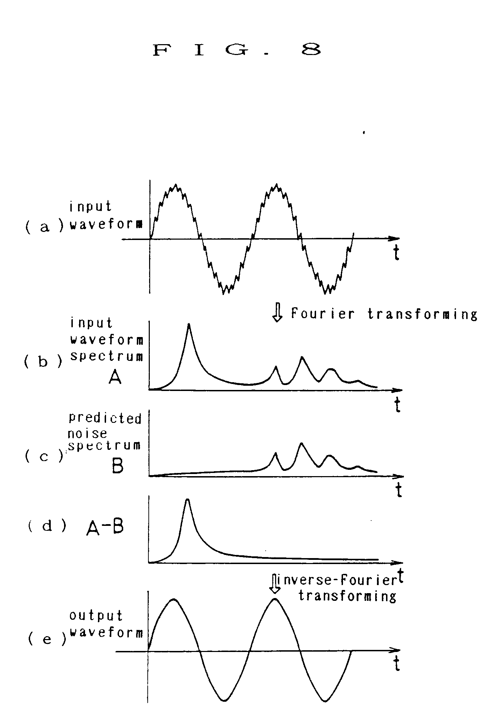

Generally, the cancellation with respect to time axis as an example of canceling method is performed by subtracting a predicted noise waveform (b) from a noise-contained voice signal (a). With such calculation, only the signal is taken out as shown in Fig. 7(c). Also, as shown in Fig. 8, the cancellation with a frequency as a reference is performed by Fourier transforming (b) a noise-contained voice signal (a), then subtracting (d) a predicted noise spectrum (c) from the transformed result, and then inverse-Fourier transforming the result to obtain a noise-canceled voice signal (e). The IFFT means 598 inverse-Fourier transforms the m channel signal supplied from the cancel means 588 to obtain a voice output.

Cancel coefficient setting means 578 sets properly a cancel coefficient utilizing the vowel/consonant area information detected by the vowel/consonant detection means 558. For example, in the voice area, in order to secure and obtain a good articulation by intentionally no-canceling noise component, the cancel coefficient is rendered small, while, in other noise portion, in order to cancel completely the noise component, the cancel coefficient is rendered large. The present invention detects not only a vowel but also consonant surely, thereby allowing a sufficiently good articulation of a voice to be obtained.

The operation of a voice signal processing device in the embodiment of the present invention configured as described above will be explained hereinafter.

A voice signal input is fast-Fourier transformed by the FFT means 518, determined for a cepstrum thereof by the cepstrum analysis means 528, and determined for a peak of the cepstrum by the peak detection means 538. Also, a mean-value of the cepstrum is determine by the mean-value calculation means 548. Then, the vowel/consonant detection means 558, when a signal indicating that the peak has been detected is inputted from the peak detection means 538, determines the voice signal input to be a vowel area. For the detection of a consonant, for example, when the cepstrum mean-value inputted from the mean-value calculation means 548 is larger than a predetermined value or when an increase of the cepstrum mean-value (differential coefficient) is larger than a predetermined value, the voice signal input is determined to be consonant area. As a result, a signal indicating a vowel/consonant, or a signal indicating a voice area including a vowel and a consonant is outputted.

On the other hand, a noise-contained voice/noise input is predicted for the noise component thereof for each channel by the noise prediction means 568. The voice/noise signal is canceled for the noise component supplied from the noise prediction means 568 for each channel by the cancel means 588. The noise cancel ratio at that time is properly set in a manner to improve the articulation for each channel by a cancel coefficient input from the cancel coefficient setting means 578. For example, as described above, in the voice area, in order to secure and obtain a good articulation by intentionally no-canceling noise component, the cancel coefficient is rendered small, while, in other noise portion, in order to cancel completely the noise component, the cancel coefficient is rendered large. The present invention detects surely also a consonant not limiting to a vowel, thereby allowing a sufficiently good articulation of a voice to be obtained. Then, the IFFT means 598 inverse-Fourier transforms the noise-canceled m-channel signal obtained from the cancel means 588, and outputs the transformed signal as a voice signal.

According to the present embodiment as described above, the noise cancel ratio of the cancel means 588 is properly given for each band by a cancel coefficient input, and the cancel coefficient input corresponding to a voice is selected with a high accuracy, thereby allowing an articulated and noise-suppressed voice output to be obtained.

An embodiment of another present invention will be explained herein-after.

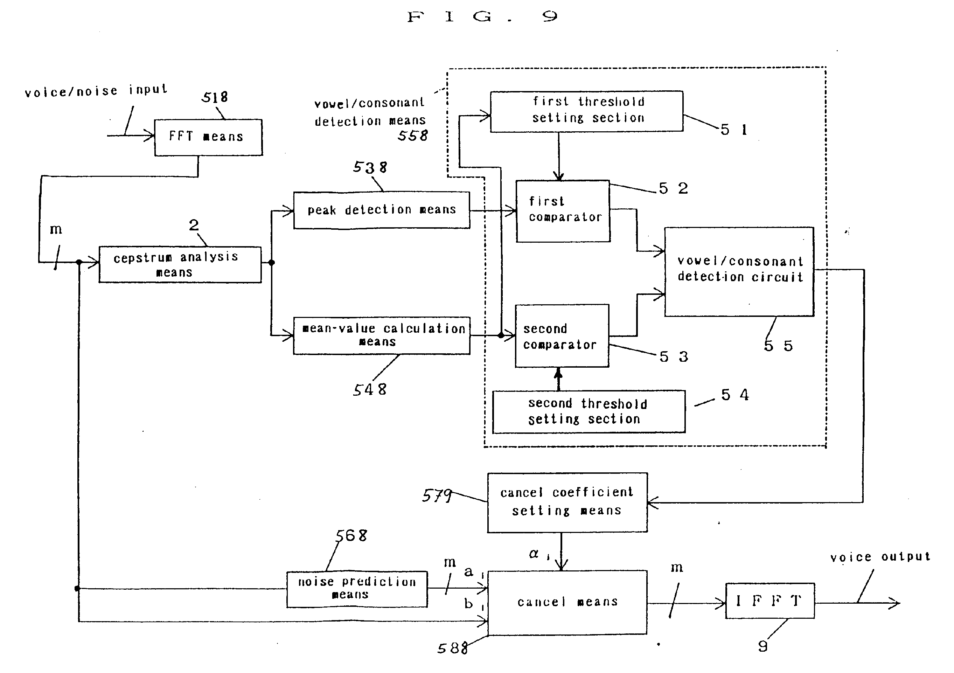

Fig. 9 is a block diagram showing an embodiment thereof. The same numeral is assigned to the same means as that in the embodiment of Fig. 5. That is, the numeral 518 indicates FFT means for fast-Fourier transforming a voice signal, the numeral 528 does cepstrum analysis means for determining a cepstrum of the Fourier-transformed spectrum-signal, the numeral 538 does peak detection means for determining a peak on the basis of the cepstrum-analyzed result, the numeral 548 does mean-value calculation means for calculating a mean-value of the cepstrum, the numeral 568 does noise prediction means, the numeral 588 does cancel means, the numeral 598 does IFFT means, and the numeral 578 does cancel coefficient setting means. Vowel/consonant detection means 558 has the following means as described in Fig.4. That is, a first comparator 52 is a circuit which compares the peak information obtained by the peak detection means 538 with a specified threshold set by a first threshold setting section 51, and outputs the result. The first threshold setting section 51 sets the threshold in response to the mean-value obtained by the mean-value calculation means 548.

Also, a second comparator 53 is a circuit which compares a specified threshold set by a second threshold setting section 54 with mean-value obtained by the mean-value calculation means 548, and outputs the result.

Also, vowel/consonant detection circuit 55 determines whether an inputted voice signal is a vowel or a consonant on the basis of the compared result obtained by the first comparator 52 and the compared result obtained by the second comparator 53.

The operation of the above embodiment will be explained hereinafter.

The FFT means 518 fast-Fourier transforms a voice signal. The cepstrum analysis means 528 determines a cepstrum of the Fourier-transformed signal. The peak detection means 538 detects a peak of the determined cepstrum. On the other hand, the mean-value calculation means 548 calculates a mean-value of the determined cepstrum.

Then, the first threshold setting means 51 sets a threshold as a criterion by which the peak obtained by the peak detection means 538 is determined to be a vowel or not. At that time, the means 51 sets the threshold with reference to the mean-value obtained by the mean-value calculation means 548. For example, where the mean-value is large, the threshold is set to a high value so that a peak indicating a vowel can be surely selected.

The first comparator 52 compares the threshold set by the first threshold setting means 51 with the peak detected by the peak detection means 538, and outputs the compared result.

On the other hand, the second threshold setting means 54 sets a specified threshold. The specified threshold is such as a threshold of mean-value itself, or a threshold of a differential coefficient indicating an increased mean-value tendency. Then, the second comparator 53 compares the mean-value obtained by the mean-value calculation means 548 with the threshold set by the second threshold setting means 54, and outputs the compared result. That is, the comparator 53 compares a calculated mean-value with a threshold mean value, or compares an increase value of the calculated mean-value with a threshold differential coefficient value.

The vowel/consonant detection circuit 55 detects a vowel and a consonant on the basis of the compared result from the first comparator 52 and the compared result from the second comparator 53. When a peak has been surely detected with respect to the compared result from the first comparator 52, the area is determined to be a vowel. When a mean-value exceeds that of the threshold with respect to the compared result from the second comparator 53, the area is determined to be a consonant. Alternatively, the circuit 55 compares an increase of the mean-value with a differential coefficient of the threshold, and when the mean-value exceeds the threshold, the area is determined to be a consonant.

The detection by the vowel/consonant detection means 55 may be also performed in such a manner that, considering a characteristic of the area of voice vowel and consonant, for example, a characteristic that a consonant is accompanied by a vowel, a consonant is determined after when the consonant is accompanied by a vowel. That is, in order to perform more surely the discrimination of a noise from a consonant, if, even when a signal is determined to be a consonant by a mean-value thereof, thereafter no vowel area continues, the signal is determined to be a noise.

The cancel coefficient setting means 579 sets a proper cancel coefficient on the basis of the voice information of the vowel/consonant area discriminated by the vowel/ consonant detection means 558.

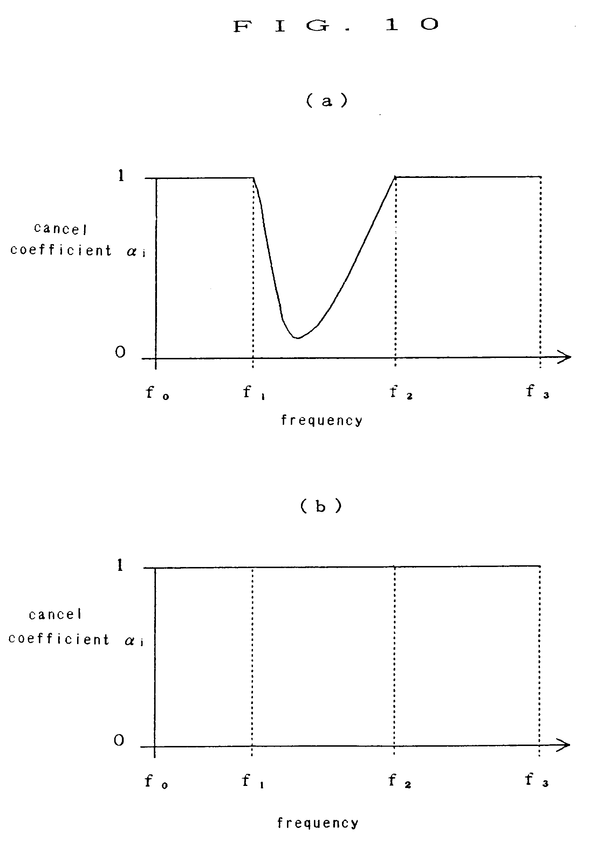

On the other hand, a noise-contained voice/noise output is predicted for the noise component thereof for each channel by the noise prediction means 568. Also, a voice signal is canceled for the noise component thereof supplied from the noise prediction means 568 for each channel by the cancel means 588. The noise cancel ratio at that time is set for each channel by a cancel coefficient supplied from the cancel coefficient setting means 579. That is, when a predicted noise component represents $a_i$, a noise-contained signal $b_i$ and a cancel coefficient $\underline{alpha}_i$, an output $c_i$ of the cancel means 588 becomes ($b_i - \underline{alpha}_i \times a_i$). The cancel coefficient $\underline{alpha}_i$ is a coefficient value as shown in Fig. 10. That is, Fig. 10 (a) shows a cancel coefficient in each band, wherein the $f_0$-$f_3$ indicates the entire band of a voice/noise input. A cancel coefficient is set by dividing the $f_0$-$f_3$ into m channels. Particularly, the $f_1$-$f_2$ indicates a band containing a voice, and is surely determined by the vowel/consonant detection means 558 as described above. Thus, in the voice band, a cancel coefficient is rendered small (close to zero) so that a noise is canceled as little as possible. That causes the articulation to be improved. That is because that a human hearing sense can hear a voice even when having a noise to some extent. In the non-voice bands $f_0$-$f_1$ and $f_2$-$f_3$, a noise is to be sufficiently canceled by taking the cancel coefficient as 1. The cancel coefficient of Fig. 10 (b) is used when it has been surely found that a signal is considered to have no voice and have only a noise, which is to be taken as 1 so that the noise can be sufficiently canceled. For example, that corresponds to a case where, when a signal with no vowel continues from view point of peak frequency, the signal is determined not to be a voice signal and accordingly, to be a noise. It is preferable that the cancel coefficients of Fig. 10 (a) and (b) can be shifted as appropriate.

The present invention, though implemented in software utilizing a computer, may also be implemented by use of a dedicated hard circuit.

As apparent by the above description, a voice signal processing device according to the present invention detects the vowel/consonant area of a noise-contained voice signal, and on the basis of the detected area, sets a proper cancel coefficient by coefficient setting means, and then utilizing the cancel coefficient, cancels properly a predicted noise component, thereby allowing the noise to be canceled and the articulation to be improved.

It is further understood by those skilled in the art that the foregoing description is a preferred embodiment and that various changes and modifications may be made in the invention without departing from the scope of the appended claims.

## Claims

1. A voice signal processing device comprising:
   frequency analysis means (1, 518) for frequency analyzing a voice input signal;
   cepstrum analysis means (2, 528) for cepstrum analyzing the output from said frequency analysis means (1, 518);
   peak detection means (3, 538) for detecting a cepstrum peak of the cepstrum-analyzed output from said cepstrum analysis means (2, 528); and

vowel/consonant detection means (5, 558) for detecting a vowel from a consonant, determining a vowel according to said cepstrum peak,
**characterized in** that
mean-value calculation means (4, 548) are provided for calculating a mean-value level of the cepstrum-analyzed output from said cepstrum analysis means (2, 528); and
the vowel/consonant detection means (5, 558) determine a consonant according to said mean-value level.

2. A voice signal processing device in accordance with claim 1, wherein the vowel/consonant detection means comprises;
a first comparator (52) for comparing the peak detected by said peak detection means (3, 538) with a first threshold set by a first threshold setting section (51);
a second comparator (53) for comparing the mean-value calculated by said mean-value calculation means (4, 548) with a specified threshold set by a second threshold setting section (54); and
a vowel/consonant detection circuit (55) for detecting a vowel and a consonant on the basis of the compared results from said first and the second comparators (52, 53) and for outputting the detected result.

3. A voice signal processing device according to claim 1, comprising:
cancel coefficient setting means (7, 578) for setting a cancel coefficient utilizing the detected result of the vowel/consonant detection means (5, 558);
noise prediction means (6, 568) into which said Fourier-transformed voice signal is input and which predicts the noise component thereof;
cancel means (8, 588) into which the noise-predicted output from the noise prediction means (6, 568), said voice signal, and the cancel coefficient signal set by said cancel coefficient setting means (7, 578) are input and which cancels a noise component considering the cancel ratio from the voice signal; and
signal composition means (9, 598) for composing the canceled output from the cancel means (8, 588).

4. A voice signal processing device according to claim 1, characterized in that the frequency analysis means is a band division means.

5. A voice signal processing method comprising the steps of:
frequency analyzing a voice input signal to obtain a spectrum;
cepstrum analyzing the spectrum to obtain a cepstrum;
detecting a peak of the cepstrum; and
determining a vowel according to said detected peak, **characterized by** the steps of calculating a mean-value level of the cepstrum; and
determining a consonant according to said mean-value level.

**Patentansprüche**

1. Sprachsignalverarbeitungsvorrichtung mit:
einer Frequenzanalyseeinrichtung (1, 518) für die Frequenzanalyse eines Spracheingangssignals;
einer Cepstralanalyseeinrichtung (2, 528) für die Cepstralanalyse des Ausgangssignals der Frequenzanalyseeinrichtung (1, 518);
einer Spitzenerfassungseinrichtung (3, 538) für die Erfassung einer cepstralen Spitze des cepstralanalysierten Ausgangssignals der Cepstralanalyseeinrichtung (2, 528); und
einer Vokal-Konsonantenerfassungseinrichtung (5, 558) für die Unterscheidung eines Vokals von einem Konsonanten, wobei ein Vokal anhand der Cepstralspitze bestimmt wird,
dadurch gekennzeichnet, daß
eine Mittelwertberechnungseinrichtung (4, 548) für die Berechnung eines Mittelwertniveaus des cepstralanalysierten Ausgangssignals der Cepstralanalyseeinrichtung (2, 528) vorgesehen ist; und
die Vokal-Konsonantenerfassungseinrichtung (5, 558) einen Konsonanten anhand des Mittelwertniveauss bestimmt.

2. Sprachsignalverarbeitungsvorrichtung nach Anspruch 1, bei der die Vokal-Konsonantenerfassungseinrichtung umfaßt:
einen ersten Komparator (52) für den Vergleich der von der Spitzenerfassungseinrichtung (3, 538) erfaßten Spitze mit einem von einem ersten Schwellwerteinstellabschnitt (51) eingestellten Schwellwert;

einen zweiten Komparator (53) für den Vergleich des von der Mittelwertberechnungseinrichtung (4, 548) berechneten Mittelwerts mit einem von einem zweiten Schwellwerteinstellabschnitt (54) eingestellten vorgegebenen Schwellwert; und

einer Vokal-Konsonantenerfassungsschaltung (55) für die Erfassung eines Vokals und eines Konsonanten auf Grundlage der Vergleichsergebnisse des ersten und zweiten Comparators (52, 53) und zum Ausgeben des erfaßten Ergebnisses.

3. Sprachsignalverarbeitungsvorrichtung nach Anspruch 1, mit:

einer Unterdrückungskoeffizienteneinstelleinrichtung (7, 578) für die Einstellung eines Unterdrückungskoeffizienten unter Verwendung des Erfassungsergebnisses der Vokal-Konsonantenerfassungseinrichtung (5, 558);

einer Geräuschvorhersageeinrichtung (6, 568), in die das Fourier-transformierte Sprachsignal eingegeben wird und die dessen Rauschanteil vorhersagt;

einer Unterdrückungseinrichtung (8, 588), in die das Geräuschvorhersageausgangssignal der Geräuschvorhersageeinrichtung (6, 568), das Sprachsignal und das von der Unterdrückungskoeffizienteneinstelleinrichtung (7, 578) eingestellte Unterdrückungskoeffizientensignal eingegeben werden und die unter Berücksichtigung des Unterdrückungsverhältnisses eine Geräuschkomponente aus dem Sprachsignal unterdrückt; und

einer Signalzusammensetzungseinrichtung (9, 598) zum Zusammensetzen des unterdrückten Ausgangssignals der Unterdrükkungseinrichtung (8, 688).

4. Sprachsignalverarbeitungsvorrichtung nach Anspruch 1, dadurch gekennzeichnet, daß die Frequenzanalyseeinrichtung eine Bandunterteilungseinrichtung ist.

5. Sprachsignalverarbeitungsverfahren mit den Schritten:

Frequenzanalyse eines Spracheingangssignals, um ein Spektrum zu erhalten;

Cepstralanalyse des Spektrums, um ein Cepstrum zu erhalten;

Erfassen einer Spitze des Cepstrums; und

Bestimmen eines Vokals anhand der erfaßten Spitze, gekennzeichnet durch die Schritte:

Berechnen eines Mittelwertniveaus des Cepstrums; und

Bestimmen eines Konsonanten anhand des Mittelwertniveaus.


**Revendications**

1. Un dispositif de traitement de signal vocal comprenant :

des moyens d'analyse de fréquence (1, 518) pour effectuer une analyse de fréquence d'un signal d'entrée vocal;

des moyens d'analyse de cepstre (2, 528) pour effectuer une analyse de cepstre du signal de sortie des moyens d'analyse de fréquence (1, 518);

des moyens de détection de pic (3, 538) destinés à détecter un pic de cepstre du signal de sortie résultant de l'analyse de cepstre des moyens d'analyse de cepstre (2, 528); et

des moyens de détection de voyelle/consonne (5, 558) destinés à discriminer une voyelle d'une consonne, qui déterminent une voyelle conformément au pic du cepstre,

**caractérisé** en ce que

des moyens de calcul de valeur moyenne (4, 548) sont incorporés pour calculer un niveau de valeur moyenne du signal de sortie résultant de l'analyse de cepstre des moyens d'analyse de cepstre (2, 528); et

les moyens de détection de voyelle/consonne (5, 558) déterminent une consonne conformément au niveau de valeur moyenne.

2. Un dispositif de traitement de signal vocal selon la revendication 1, dans lequel les moyens de détection de voyelle/consonne comprennent :

un premier comparateur (52) pour comparer le pic détecté par les moyens de détection de pic (3, 538) avec un premier seuil qui est fixé par une première section de fixation de seuil (51);

un second comparateur (53) pour comparer la valeur moyenne calculée par les moyens de calcul de valeur moyenne (4, 548) avec un seuil spécifié qui est fixé par une seconde section de fixation de seuil (54); et

un circuit de détection de voyelle/consonne (55) pour détecter une voyelle et une consonne sur la base des résultats de comparaison provenant des premier et second comparateurs (52, 53), et pour fournir en sortie le résultat détecté.

3. Un dispositif de traitement de signal vocal selon la revendication 1, comprenant :

des moyens de fixation de coefficient d'annulation (7, 578) pour fixer un coefficient d'annulation en utilisant le résultat détecté des moyens de détection de voyelle/consonne (5, 558);

des moyens de prédiction de bruit (6, 568) auxquels est appliqué le signal vocal ayant subi une transformation de Fourier, et qui prédisent la composante de bruit de ce signal;

des moyens d'annulation (8, 588) auxquels sont appliqués le signal de sortie de prédiction de bruit des moyens de prédiction de bruit (6, 568), le signal vocal et le signal de coefficient d'annulation qui est fixé par les moyens de fixation de coefficient d'annulation (7, 578), et qui annulent une composante de bruit du signal vocal en se basant sur le rapport d'annulation; et

des moyens d'élaboration de signal (9, 598) pour élaborer le signal de sortie à bruit annulé à partir des moyens d'annulation (8, 588).

4. Un dispositif de traitement de signal vocal selon la revendication 1, caractérisé en ce que les moyens d'analyse de fréquence consistent en moyens de division en bandes.

5. Un procédé de traitement de signal vocal comprenant les étapes suivantes :

on effectue une analyse de fréquence d'un signal d'entrée vocal pour obtenir un spectre;

on effectue une analyse de cepstre du spectre, pour obtenir un cepstre;

on détecte un pic du cepstre; et

on détermine une voyelle conformément au pic détecté,

**caractérisé** par les étapes suivantes:

on calcule un niveau de valeur moyenne du cepstre; et

on détermine une consonne conformément à ce niveau de valeur moyenne.

FIG. 1 (PRIOR ART)

voice/noise input

filter control section  11

BPF group  12

adder  13

voice output

F I G . 2

voice signal input

1 band division means (frequency analysis means)

FFT means

2 pitch extraction-analysis means

cepstrum analysis means

3 pitch detection means

peak detection means

mean-value calculation means

4

vowel consonant detection means

5 vowel/consonant detection means

detected output

EP 0 442 342 B1

# F I G . 3

(a)

level

Spectrum

frequency

(b)

level

Cepstrum

formant

pitch

a

b

quefrency

F I G .  4

# F I G . 5

voice/noise input

(frequency analysis means)
518 band division means

518 FFT means

528 cepstrum analysis means

538 peak detection means

548 mean-value calculation means

558 vowel/consonant detection circuit

578 cancel coefficient setting means

568 noise prediction means

588 cancel means

598 IFFT

voice output

band composition means
(signal composition means)

EP 0 442 342 B1

F I G . 6

F I G . 7

input
waveform
( a )    A

predicted
noise
waveform
( b )    B

output
waveform
( c )    A-B

F I G . 8

(a) input waveform

⇓ Fourier transforming

(b) input waveform spectrum A

(c) predicted noise spectrum B

(d) A−B

⇓ inverse-Fourier transforming

(e) output waveform

voice/noise input

518

FFT means

vowel/consonant
detection means
558

first threshold
setting section

5 1

538

m

2

cepstrum analysis
means

peak detection means

first
comparator

5 2

vowel/consonant
detection circuit

mean-value calculation
means

second
comparator

5 3

5 5

548

second threshold
setting section

5 4

cancel coefficient
setting means

579

568

$\alpha_i$

voice output

noise prediction
means

m

$a_i$

$b_i$

cancel means

m

I F F T

588

9

EP 0 442 342 B1

# F I G . 1 0

## ( a )

cancel coefficient $\alpha_i$

1

0

$f_0$    $f_1$    $f_2$    $f_3$

frequency

## ( b )

cancel coefficient $\alpha_i$

1

0

$f_0$    $f_1$    $f_2$    $f_3$

frequency